# EUROPÄISCHE PATENTSCHRIFT

(11) **EP 3 011 651 B1**
(45) Veröffentlichungstag und Bekanntmachung des Hinweises auf die Patenterteilung: **27.01.2021**
(21) Anmeldenummer: 14722677.3
(22) Anmeldetag: 09.05.2014
(51) Int. Cl.: H02H 3/087, H02H 3/10

(54) **SCHALTUNGSANORDNUNG UND ENERGIESPEICHERSYSTEM**
CIRCUIT ARRANGEMENT AND ENERGY STORE SYSTEM
CIRCUIT ET SYSTÈME D'ACCUMULATION D'ÉNERGIE

(30) Priorität: 20.06.2013 DE 102013211692
(43) Veröffentlichungstag der Anmeldung: 27.04.2016
(73) Patentinhaber: Bayerische Motoren Werke Aktiengesellschaft, 80809 München (DE)
(72) Erfinder: LOPEZ DE ARROYABE, Jose, 81541 München (DE)
(86) Internationale Anmeldenummer: PCT/EP2014/059511
(87) Internationale Veröffentlichungsnummer: WO 2014/202279

(56) Entgegenhaltungen:
- DE-A1- 4 136 240
- DE-A1- 4 216 177
- US-A- 4 575 673
- US-A1- 2012 293 017

## Beschreibung

Die Erfindung betrifft eine Schaltungsanordnung zum Betreiben eines Energiespeichers eines Elektro- und/oder Hybridfahrzeugs sowie ein Energiespeichersystem.

In der Fahrzeugtechnik ist der Einsatz von Hochvoltbatterien bekannt, die in einem Elektro- und/oder Hybridfahrzeug den für den Antrieb eines Elektromotors benötigten Strom bereitstellen. In einem motorischen Betrieb des Elektro- und/oder Hybridfahrzeuges kann elektrische Energie aus der sogenannten Traktionsbatterie über ein sogenanntes Traktionsnetz an den Elektromotor übertragen werden. In einem generatorischen Betrieb (Rekuperationsbetrieb) kann elektrische Energie von dem Elektromotor über das Traktionsnetz an die Traktionsbatterie übertragen werden. Aus Sicherheitsgründen ist erforderlich, dass die Traktionsbatterie elektrisch von dem Traktionsnetz und von dem Traktionsnetz umfassten elektrischen oder elektronischen Elementen getrennt werden kann. Hierfür sind in der Regel sogenannte Schütze oder Schützschalter zwischen Anschlussstellen der Traktionsbatterie und Anschlussstellen des Traktionsnetzes angeordnet.

US 4,575,673 offenbart einen Halbleiter-Netzschalter, der einen gesteuerten Schalter aufweist zum Anschluss einer elektrischen Leistung an eine Last, wenn der tatsächliche Laststrom kleiner ist als ausgewählte aktuelle Referenzwerte.

DE 41 36 240 A1 offenbart einen Überstromschutzschalter mit zwei Wicklungen, dessen erste Wicklungen vom Verbraucherstrom durchflossen wird. Abgeleitet wird davon ein Spannungsabfall, der mit einer Sollspannung in einem Komparator verglichen wird.

US 2012/0293017 A1 offenbarte eine Schalteinrichtung. Die Schalteinrichtung ist so konfiguriert, dass sie einen Ein-Zustand oder einen Aus-Zustand aufweist, wobei der Ein-Zustand erlaubt, dass ein Strom entlang eines Strompfades von einer Stromversorgung zu einer Schaltungsvorrichtung fließt. Eine Überwachungseinrichtung weist einen oder mehrere Sensoreingänge auf, um eine elektrische Charakteristik des Strompfades zu messen. Die elektrische Charakteristik kann beispielsweise ein Strom, eine Spannung und/oder eine Leistung umfassen. Die Überwachungseinrichtung ist ausgebildet zur Ausgabe eines Ausgangssignals abhängig von der gemessenen elektrischen Charakteristik. Die Überwachungseinrichtung kann mit der Schaltungseinrichtung auf einem Chip integriert werden.

DE 42 16 177 A1 offenbart eine Schaltung, die einen Überstromschutz für ein Leistungselement, beispielsweise einen IGBT, MOSFET oder Bipolartransistor, welches zwischen eine Stromversorgung und einen Verbraucher eingefügt ist, bietet, weist eine Steuerschaltung auf, die einem Gateverstärker am Gate des Leistungselements ein Eingangssignal zur Verfügung stellt. Der Gateverstärker weist eine Photodiode auf, die zwischen die Verstärkerstromquelle und das Gate des Leistungselements geschaltet ist.

Die Aufgabe, die der Erfindung zu Grunde liegt, ist es, eine Schaltungsanordnung zum Betreiben eines Energiespeichers eines Elektro- und/oder Hybridfahrzeugs und ein Energiespeichersystem zu schaffen, die eine ausreichend zuverlässige elektrische Trennung eines Energiespeichers von einem elektrischen Energienetz eines Elektro- und/oder Hybridfahrzeugs ermöglichen.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich gemäß einem ersten Aspekt aus durch eine Schaltungsanordnung zum Betreiben eines Energiespeichers eines Elektro- und/oder Hybridfahrzeugs. Die Schaltungsanordnung weist eine analoge Überwachungsschaltung auf, die ausgebildet und angeordnet ist, ein Messsignal, das repräsentativ ist für einen Strom, der durch den Energiespeicher fließt, zu erfassen und abhängig von dem Messsignal ein vorgegebenes erstes Steuersignal zu erzeugen. Ferner umfasst die Schaltungsanordnung ein Halbleiterschaltelement, das ausgebildet ist, in einem ersten Schaltzustand den Energiespeicher elektrisch zu koppeln mit einem elektrischen Energienetz des Elektro- und Hybridfahrzeugs und in einem zweiten Schaltzustand den Energiespeicher elektrisch zu entkoppeln von dem elektrischen Energienetz, wobei das Halbleiterschaltelement einen Steueranschluss aufweist, der mit einem Ausgang der Überwachungsschaltung signaltechnisch gekoppelt ist, und der Schaltzustand des Halbleiterschaltelements abhängig von dem ersten Steuersignal einstellbar ist. Die Schaltungsanordnung umfasst eine digitale Steuereinrichtung auf. Die digitale Steuereinrichtung ist ausgebildet, abhängig von zumindest einer vorgegebenen energiespeicherbezogenen Betriebsgröße und/oder zumindest einer vorgegebenen fahrzeugbezogenen Umfeldgröße und/oder zumindest einer vorgegebenen fahrzeugbezogenen Betriebsgröße und/oder zumindest einer vorgegebenen energienetzbezogenen Betriebsgröße ein vorgegebenes zweites Steuersignal zu erzeugen und an einer vorgegebenen Schnittstelle auszugeben, die mit dem Steueranschluss des Halbleiterschaltelements signaltechnisch gekoppelt ist. Der Schaltzustand des Halbleiterschaltelements ist abhängig von dem zweiten Steuersignal einstellbar. Die Schaltungsanordnung umfasst ein Entkopplungsschaltungsmodul mit einem galvanischen Entkopplungselement, einem Ausgang und zumindest einem Eingang. Der Ausgang ist elektrisch gekoppelt mit dem Halbleiterschaltelement. Der Eingang ist elektrisch gekoppelt mit der Überwachungsschaltung und mit der Steuereinrichtung zum Empfang des ersten Steuersignals und des zweiten Steuersignals. Das galvanische Entkopplungselement entkoppelt den Ausgang und den zumindest einen Eingang galvanisch und verbindet den Ausgang und den zumindest einen Eingang potentialfrei. Vorteilhafterweise ermöglicht dies, einen maximalen Strom, der durch den Energiespeicher fließt, auf einen vorgegebenen Wert zu begrenzen. Dies hat insbesondere den Vorteil, dass eine Gewährleistungsgrenze und somit eine Herstellervorgabe für den maximalen Strom, der durch den Energiespeicher, insbesondere durch Zellen des Energiespeichers, fließt, nicht überschritten wird. Hierdurch können Gewährleistungskosten reduziert werden und es kann ein Beitrag dazu geleistet werden, Umweltbelastungen zu reduzieren, da der jeweilige Energiespeicher eine höhere Lebensdauer aufweisen kann. Ferner kann die Zufriedenheit eines Fahrzeugnutzers gesteigert werden, da die Wahrscheinlichkeit, dass der Energiespeicher ausgewechselt werden muss, aufgrund einer Überschreitung des maximalen Stroms, gering gehalten werden kann. Die Entkopplung des Energiespeichers von dem Energienetz kann aufgrund einer extrem kurzen Reaktionszeit der Überwachungsschaltung sehr schnell erfolgen, so dass Leitungen des Energienetzes für einen geringeren Kurzschlussstrom ausgelegt werden können und sich Anforderungen hinsichtlich einer Kurzschlussfestigkeit der Leitungen und/oder Steckverbindern reduzieren. Hierdurch können weitere Herstellkosten für das Elektro- und/oder Hybridfahrzeug eingespart werden. Vorteilhafterweise ermöglicht die schnelle Reaktionszeit der analogen Überwachungsschaltung, dass der Kurzschluss und/oder ein Überstrom derart schnell detektiert werden kann und der Energiespeicher derart schnell von dem Energienetz getrennt werden kann, dass auf eine ergänzende Schmelzsicherung verzichtet werden kann. Das Halbleiterschaltelement hat den Vorteil, dass es einen sehr geringen Bauraum erfordert und eine Leistung, die zur Steuerung des Halbleiterschaltelements bereitzustellen ist, sehr gering gehalten werden kann.

Dass der Schaltzustand des Halbleiterschaltelements abhängig von dem zweiten Steuersignal einstellbar ist, hat den Vorteil, dass der Energiespeicher abhängig von weiteren Größen von dem Energienetz getrennt oder mit dem Energienetz elektrisch gekoppelt werden kann.

Das Entkopplungsmodul hat den Vorteil, dass das Halbleiterschaltelement galvanisch getrennt ist von der analogen Überwachungsschaltung und/oder von der Steuereinrichtung.

Das Energienetz kann eine Last umfassen, insbesondere einen Elektromotor zum Antrieb des Elektro- und Hybridfahrzeugs mit einer zugehörigen Leistungselektronik. Die Schaltungsanordnung kann vorzugsweise ein oder zwei Halbleiterschaltelemente aufweisen, wodurch eine einpolige beziehungsweise eine zweipolige Trennung des Energiespeichers von dem Energienetz möglich ist. Vorzugsweise ist der Energiespeicher ein Hochvolt-Energiespeicher. Hierbei wird als Hochvolt-Energiespeicher ein Energiespeicher bezeichnet, der einen Antriebsstrang bedient.

In einer weiteren vorteilhaften Ausgestaltung ist ein vorgegebener Verlauf des ersten Steuersignals repräsentativ für eine Anforderung, dass das Halbleiterschaltelement den zweiten Schaltzustand einnimmt. Ferner ist ein vorgegebener Verlauf des zweiten Steuersignals repräsentativ für eine Anforderung, dass das Halbleiterschaltelement den zweiten Schaltzustand einnimmt. Wenn das erste Steuersignal oder das zweite Steuersignal oder beide Steuersignale den jeweiligen vorgegebenen Verlauf aufweisen, wird der Steueranschluss des Halbleiterschaltelements derart angesteuert, dass das Halbleiterschaltelement den zweiten Schaltzustand einnimmt. Dies hat den Vorteil, dass gleichgültig, ob von der analogen Überwachungsschaltung oder von der Steuereinrichtung ein Kurzschluss und/oder ein Überstrom detektiert wird, der Hochvolt-Energiespeicher getrennt wird von dem Energienetz. Diese Unabhängigkeit kann vorteilhaft für die funktionale Sicherheit (FuSi) im Fahrzeug genutzt werden.

In einer weiteren vorteilhaften Ausgestaltung des ersten Aspekts ist ein vorgegebener weiterer Verlauf des zweiten Steuersignals repräsentativ für eine Anforderung, dass das Halbleiterschaltelement den ersten Schaltzustand einnimmt. Wenn das zweite Steuersignal den vorgegebenen weiteren Verlauf aufweist und das erste Steuersignal nicht den vorgegebenen Verlauf aufweist, wird der Steueranschluss des Halbleiterschaltelements derart angesteuert, dass das Halbleiterschaltelement den ersten Schaltzustand einnimmt. Dies hat den Vorteil, dass, wenn kein Kurzschlussstrom oder Überstrom detektiert wird, abhängig von den weiteren Größen der Energiespeicher elektrisch gekoppelt werden kann mit dem Energienetz.

In einer weiteren vorteilhaften Ausgestaltung gemäß dem ersten Aspekt umfasst das Halbleiterschaltelement zumindest einen Feldeffekttransistor. Vorteilhafterweise weisen die Feldeffekttransistoren, die für solch eine Anwendung geeignet ausgebildet sind, eine wesentlich höhere Schaltgeschwindigkeit auf als mechanische Relais oder Schützeschaltungen oder Sicherungen, so dass eine Trennung des Energiespeichers von dem Energienetz wesentlich schneller erfolgen kann als bei mechanischen Relais oder Schützeschaltungen oder Sicherungen.

In einer weiteren vorteilhaften Ausgestaltung gemäß dem ersten Aspekt umfasst das Halbleiterschaltelement zumindest einen ersten Feldeffekttransistor und zumindest einen zweiten Feldeffekttransistor, wobei jeweils der zumindest eine zweite Feldeffekttransistor antiseriell in Reihe zu dem zumindest einen ersten Feldeffekttransistor geschaltet ist. Solch eine Beschaltung wird auch Back-to-Back-Anordung genannt. Dies hat den Vorteil, dass das Halbleiterschaltelement für beide Stromrichtungen als Schaltelement, das den ersten und zweiten Schaltzustand aufweisen kann, geeignet ist. Vorzugsweise weist das Halbleiterschaltelement mehrere solche Transistorpaare auf, die parallel geschaltet sind. Dies hat den Vorteil, dass die Transistoren eine geringere Maximalstrombeständigkeit aufweisen können.

In einer weiteren vorteilhaften Ausgestaltung gemäß dem ersten Aspekt umfasst das galvanische Entkopplungselement ein optisches Sendeelement und ein optisches Empfangselement. Vorteilhafterweise ermöglicht dies eine einfache und kostengünstige Herstellung des Entkopplungselements.

In einer weiteren vorteilhaften Ausgestaltung gemäß dem ersten Aspekt weist die analoge Überwachungsschaltung einen Stromsensor und einen analogen Komparator auf, wobei der analoge Komparator ausgebildet und angeordnet ist, abhängig von einem Vergleich eines vorgegebenen Schwellenwerts mit einem von dem Stromsensor erfassten Messwert, der repräsentativ ist für einen Strom, der durch den Energiespeicher fließt, das erste Steuersignal zu erzeugen. Vorteilhafterweise ermöglicht dies eine sehr präzise und schnelle Detektion eines Kurzschlussstromes und/oder eines Überstromes, der durch den Energiespeicher fließt.

Die Erfindung zeichnet sich gemäß einem zweiten Aspekt aus durch ein Energiespeichersystem. Das Energiespeichersystem weist einen Energiespeicher und eine Schaltungsanordnung gemäß dem ersten Aspekt auf. Vorteilhafte Ausgestaltungen des ersten Aspekts gelten hierbei auch für den zweiten Aspekt.

Die Schaltungsanordnung ist vorzugsweise derart ausgebildet, dass eine Summenzeit, die gebildet wird von einer Antwortzeit der analogen Überwachungsschaltung plus einer Umschaltzeitdauer des Halbleiterschaltelements von dem ersten in den zweiten Schaltzustand plus einer Signalverzögerungsdauer des ersten Steuersignals vom Ausgang der analogen Überwachungsschaltung bis zu dem Steueranschluss, kleiner ist als eine vorgegebene maximale Stromanstiegsdauer, wobei die maximale Stromanstiegsdauer vorgegeben ist durch einen vorgegebenen Maximalstrom, der durch den Energiespeicher fließen darf, ohne diesen zu zerstören, und einer vorgegebenen Induktivität des Energienetzes, wenn das Energienetz einen ohmschen Kurzschluss aufweist.

Ausführungsbeispiele der Erfindung sind im Folgenden anhand der schematischen Zeichnungen erläutert.

Es zeigen:
- Figur 1: ein Blockschaltbild für ein beispielhaftes Energiespeichersystem und
- Figur 2: ein Zeitdiagramm für einen Strom-, Spannungs- und Temperaturverlauf.

Elemente gleicher Konstruktion oder Funktion sind figurenübergreifend mit den gleichen Bezugszeichen versehen.

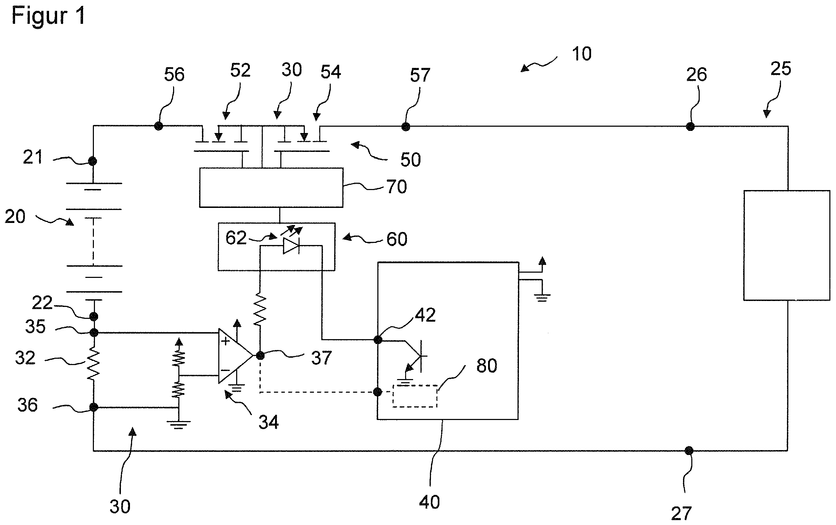

Figur 1 zeigt ein Energiespeichersystem 10, das mit einem Energienetz 25 eines Elektro- und/oder Hybridfahrzeugs elektrisch gekoppelt ist. Das Elektro- und/oder Hybridfahrzeug ist beispielsweise ein Motorrad.

Das Energiespeichersystem 10 umfasst einen Energiespeicher 20. Der Energiespeicher 20 ist beispielsweise als Hochvolt-Batterie für ein Elektro- und/oder Hybridfahrzeug ausgebildet. Die Batterie weist mehrere Batteriezellen auf. Die Batteriezellen können beispielsweise als Lithium-Ionen-Zellen ausgebildet sein. Die Batteriezellen können nicht nur, wie in Figur 1 gezeigt, in Serie, sondern auch parallel miteinander verschaltet sein oder eine Kombination aus beiden.

Das Energiespeichersystem 10 umfasst eine Schaltungsanordnung zum Betreiben des Energiespeichers.

Die Schaltungsanordnung weist eine analoge Überwachungsschaltung 30 auf, die ausgebildet und angeordnet ist, ein Messsignal, das repräsentativ ist für einen Strom, der durch den Energiespeicher 20 fließt, zu erfassen und, abhängig von dem Messsignal, ein vorgegebenes erstes Steuersignal zu erzeugen. Die analoge Überwachungsschaltung 30 umfasst beispielsweise einen Stromsensor, zum Beispiel einen Messwiderstand 32. und einen analogen Komparator 34. Der analoge Komparator 34 ist ausgebildet und angeordnet, abhängig von einem Vergleich eines vorgegebenen Schwellenwertes mit einer an dem Messwiderstand 32 abfallenden Spannung das erste Steuersignal zu erzeugen. Der Messwiderstand 32 ist beispielsweise als Shunt ausgebildet. Der Strom, der durch den Shunt fließt, verursacht einen zu ihm proportionalen Spannungsabfall. Alternativ oder zusätzlich kann der Stromsensor beispielsweise einen Hallsensor aufweisen.

Der Komparator 34 weist zum Beispiel einen Operationsverstärker auf mit einer vorgegebenen Beschaltung. Der Komparator reagiert vorzugsweise deutlich schneller als ein Software-Algorithmus. Der Komparator 34 weist beispielsweise eine Antwortzeit von 1 µs auf.

Die analoge Überwachungsschaltung 30 ist in einem Verbraucherpfad, der den Energiespeicher 20 mit dem Energienetz 25 elektrisch koppelt, angeordnet. In dem Verbraucherpfad fließt ein Gesamtstrom, der an das Energienetz 25 abgegeben wird. Der Gesamtstrom kann hierbei positiv oder negativ sein. Der Energiespeicher 20 weist einen ersten und einen zweiten Pol 21, 22 auf. Das Energienetz 25 weist einen ersten Anschluss 26 und einen zweiten Anschluss 27 auf.

Der Stromsensor ist beispielsweise angeordnet zur Erfassung eines Stromes, der von dem zweiten Pol 22 des Energiespeichers zu dem zweiten Anschluss 27 des Energienetzes fließt. So ist der Messwiderstand 32 beispielsweise mit einem ersten Messanschluss 35 elektrisch gekoppelt mit dem zweiten Pol 22 des Energiespeichers 20 und mit einem zweiten Messanschluss 36 elektrisch gekoppelt mit dem zweiten Anschluss 27 des Energienetzes 25. Die an dem Messwiderstand 32 abfallende Spannung wird zwischen dem ersten und zweiten Messanschluss 35, 36 erfasst. Die analoge Überwachungsschaltung 30 ist somit ausgebildet, einen Überstrom und/oder Kurzschlussstrom, der durch den Energiespeicher fließt, zu detektieren. Alternativ oder zusätzlich ist möglich, dass der Stromsensor angeordnet ist zur Erfassung eines Stromes, der von dem ersten Pol 21 des Energiespeichers zu dem ersten Anschluss 26 des Energienetzes fließt. Der Messwiderstand 32 kann somit alternativ beispielsweise zwischen dem ersten Pol 21 des Energiespeichers und dem ersten Anschluss 26 des Energienetzes 25 geschaltet sein. Insbesondere kann der Messwiderstand 32 beispielsweise mit dem ersten Messanschluss 35 elektrisch gekoppelt sein mit dem ersten Pol 21 des Energiespeichers 20 und mit dem zweiten Messanschluss 36 elektrisch gekoppelt sein mit einem ersten Koppelanschluss 56 eines Halbleiterschaltelements 50 der Schaltungsanordnung.

Die Schaltungsanordnung umfasst zumindest ein Halbleiterschaltelement 50, das ausgebildet ist, in einem ersten Schaltzustand den Energiespeicher 20 elektrisch zu koppeln mit einem elektrischen Energienetz 25 des Elektro- und/oder Hybridfahrzeugs und in einem zweiten Schaltzustand den Energiespeicher 20 elektrisch zu entkoppeln von dem elektrischen Energienetz 25, wobei das Halbleiterschaltelement 50 einen Steueranschluss aufweist, der mit einem Ausgang 37 der Überwachungsschaltung 30 signaltechnisch gekoppelt ist, und der Schaltzustand des Halbleiterschaltelements 50 abhängig von dem ersten Steuersignal einstellbar ist.

Das Halbleiterschaltelement 50 weist einen ersten und einen zweiten Koppelanschluss 56, 57 auf. Der erste Koppelanschluss 56 ist beispielsweise elektrisch gekoppelt mit dem ersten Pol 21 des Energiespeichers 20. Der zweite Koppelanschluss 57 ist beispielsweise elektrisch gekoppelt mit dem ersten Anschluss 26 des Energienetzes 25.

Alternativ ist möglich, dass das Halbleiterschaltelement 50 oder ein weiteres Halbleiterschaltelement 50 derart angeordnet ist, dass es in einem ersten Schaltzustand den zweiten Pol 22 des Energiespeichers 20 mittelbar oder unmittelbar koppelt mit dem zweiten Anschluss 27 des Energienetzes 25 und in einem zweiten Schaltzustand den zweiten Pol 22 des Hochvoltenergiespeichers 20 mittelbar oder unmittelbar entkoppelt von dem zweiten Anschluss 27 des Energienetzes 25. Mittelbar Koppeln oder Entkoppeln bedeutet hierbei, dass in Reihe zu dem Halbleiterschaltelement 50 weitere Schaltungskomponenten, zum Beispiel der Messwiderstand 32, angeordnet sein können.

Das Halbleiterschaltelement 50 umfasst beispielsweise zumindest einen ersten Feldeffekttransistor und zumindest einen zweiten Feldeffekttransistor, wobei jeweils der zumindest eine zweite Feldeffekttransistor antiseriell in Reihe zu dem zumindest einen ersten Feldeffekttransistor geschaltet ist. Vorzugsweise weist das Halbleiterschaltelement 50 mehrere, beispielsweise sechs, solche back-to-back geschaltete Transistorpaare auf, die parallel geschaltet sind. Die Feldeffekttransistoren sind beispielsweise als Metal Oxide Semiconductor Feldeffekttransistoren (MOSFET) ausgebildet, insbesondere als n-Kanal-MOSFET.

Der Steueranschluss umfasst beispielsweise einen Gate-Treiber 70 zur Einstellung einer jeweiligen Gate-Spannung der Feldeffekttransistoren. Der Gate-Treiber 70 weist beispielsweise eine Verzögerungszeit von maximal 100 ns auf.

Die Schaltungsanordnung weist beispielsweise eine digitale Steuereinrichtung 40 auf. Die digitale Steuereinrichtung 40 ist ausgebildet, abhängig von zumindest einer vorgegebenen energiespeicherbezogenen Betriebsgröße und/oder zumindest einer vorgegebenen fahrzeugbezogenen Umfeldgröße und/oder zumindest einer vorgegebenen fahrzeugbezogenen Betriebsgröße und/oder zumindest einer vorgegebenen energienetzbezogenen Betriebsgröße ein vorgegebenes zweites Steuersignal zu erzeugen und an einer vorgegebenen Schnittstelle auszugeben, die mit dem Steueranschluss des Halbleiterschaltelements 50 signaltechnisch gekoppelt ist. Der Schaltzustand des Halbleiterschaltelements 50 ist abhängig von dem zweiten Steuersignal einstellbar.

Die digitale Steuereinrichtung 40 umfasst beispielsweise eine Recheneinheit, zum Beispiel eine zentrale Prozessoreinheit oder einen Mikrocontroller.

Zur Steuerung einer Entkopplung und Kopplung des Energiespeichers 20 mit dem Energienetz 25 wird vorzugsweise das erste und das zweite Steuersignal genutzt.

Hierbei ist ein vorgegebener Verlauf des ersten Steuersignals repräsentativ für eine Anforderung, dass das Halbleiterschaltelement 50 den zweiten Schaltzustand einnimmt und ein vorgegebener Verlauf des zweiten Steuersignals ist ebenfalls repräsentativ für eine Anforderung, dass das Halbleiterschaltelement 50 den zweiten Schaltzustand einnimmt. Wenn das erste Steuersignal oder das zweite Steuersignal oder beide Steuersignale den jeweiligen vorgegebenen Verlauf aufweisen, wird der Steueranschluss des Halbleiterschaltelements 50 derart angesteuert, dass das Halbleiterschaltelement 50 den zweiten Schaltzustand einnimmt.

Ferner ist ein vorgegebener weiterer Verlauf des zweiten Steuersignals repräsentativ für eine Anforderung, dass das Halbleiterschaltelement 50 den ersten Schaltzustand einnimmt. Wenn das zweite Steuersignal den vorgegebenen weiteren Verlauf aufweist und das erste Steuersignal nicht den vorgegebenen Verlauf aufweist, wird der Steueranschluss des Halbleiterschaltelements 50 derart angesteuert, dass das Halbleiterschaltelement 50 den ersten Schaltzustand einnimmt. Dies bedeutet, dass nur wenn kein Überstrom und/oder Kurzschlussstrom detektiert wird, der Energiespeicher und das Energienetz gekoppelt werden.

Somit gibt im Normalfall, ohne Kurzschluss, die Steuereinrichtung 40 den jeweiligen Schaltzustand des Halbleiterschaltelements 50 vor. Im Überstromfall und/oder Kurzschlussfall reagiert die analoge Überwachungsschaltung 30 schneller und gibt somit den zweiten Schaltzustand für das Halbleiterschaltelement 50 vor.

Für die Ansteuerung des Steueranschlusses des Halbleiterschaltelements 50 sind beispielsweise der Ausgang 37 der analogen Überwachungsschaltung 30 und ein Steuersignalausgang der digitalen Steuereinrichtung 40, an dem das zweite Steuersignal ausgegeben wird, derart vorgegeben elektrisch gekoppelt, so dass das erste und zweite Steuersignal vorgegeben verknüpft werden.

Optional weist die Steuereinrichtung 40 einen Watchdog-Timer auf. Der Watchdog-Timer kann als zusätzlicher Chip ausgebildet sein oder als Komponente der Recheneinheit, zum Beispiel des Prozessors.

Der Watchdog-Timer ist beispielsweise ausgebildet, wenn der Strom, der durch den Energiespeicher 20 fließt, für eine vorgegebene Zeitdauer einen vorgegebenen Wert überschreitet, die Steuereinrichtung 40 zu veranlassen, das zweite Steuersignal mit dem vorgegebenen Verlauf zu erzeugen, so dass der Steueranschluss des Halbleiterschaltelements 50 derart angesteuert ist, dass das Halbleiterschaltelement 50 den zweiten Schaltzustand einnimmt.

Die Schaltungsanordnung umfasst beispielsweise ein Entkopplungsschaltungsmodul 60 mit einem galvanischen Entkopplungselement, einem Ausgang und einem ersten und zweiten Eingang, wobei der Ausgang elektrisch gekoppelt ist mit dem Halbleiterschaltelement 50, insbesondere mit dem Gate-Treiber 70. Der erste Eingang ist elektrisch gekoppelt mit der Überwachungsschaltung 30 und der zweite Eingang ist elektrisch gekoppelt mit dem Steuerausgang 42 der Steuereinrichtung 40. Das galvanische Entkopplungselement entkoppelt den Ausgang von dem ersten und dem zweiten Eingang galvanisch und verbindet den Ausgang und die beiden Eingänge potentialfrei. Das galvanische Entkopplungselement weist vorzugsweise ein optisches Sendeelement und ein optisches Empfangselement auf. Das galvanische Entkopplungselement weist beispielsweise als Sendeelement eine Leuchtdiode 62 auf, deren Anode elektrisch gekoppelt ist mit dem Ausgang 37 der analogen Überwachungsschaltung 30 und deren Kathode elektrisch gekoppelt ist mit dem Steuerausgang 42 der Steuereinrichtung 40. Die Leuchtdiode 62 ermöglicht die vorgegebene Verknüpfung des ersten und zweiten Steuersignals.

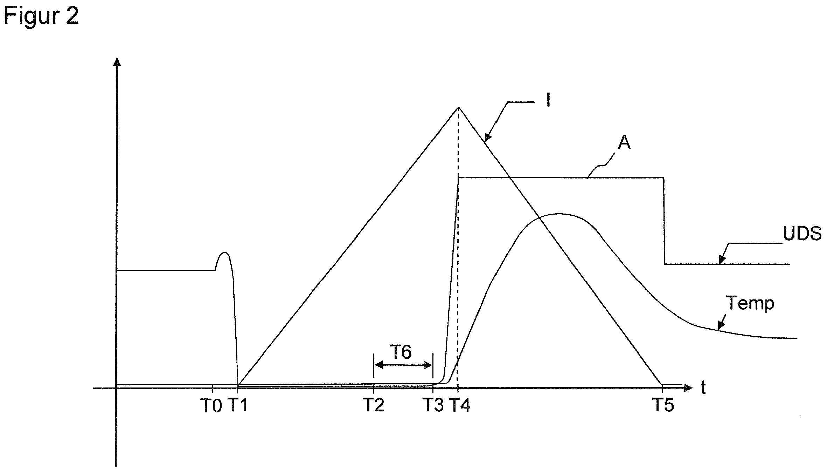

Figur 2 zeigt einen beispielhaften zeitlichen Verlauf eines Laststromes I durch das Energienetz 25 beziehungsweise durch die Last. Ferner zeigt Figur 2 einen beispielhaften zeitlichen Verlauf einer Temperatur Temp eines jeweiligen sperrenden Feldeffekttransistorchips sowie einen zeitlichen Verlauf einer Drain-Source-Spannung UDS des jeweiligen Feldeffekttransistors. Die in Figur 2 gezeigten Verläufe charakterisieren insbesondere eine Überstromabschaltung im Kurzschlussfall.

Im Kurzschlussfall kann das elektrische Verhalten des Energienetzes 25 mit einem vereinfachten Ersatzschaltbild, das einen ohmschen Widerstand und eine Induktivität aufweist, charakterisiert werden. Der ohmsche Widerstand weist beispielsweise näherungsweise 100 µΩ auf. Die Induktivität weist beispielsweise einen Wert von näherungsweise 5 pH auf. Im Falle des Kurzschlusses steigt der Strom sehr schnell an. Der Strom wird dann praktisch nur durch die Induktivität begrenzt.

Im Folgenden wird die Funktionsweise der Schaltungsanordnung näher beschrieben.

Zu einem Zeitpunkt T0 wird das zweite Steuersignal von der Steuereinrichtung 40 gemäß dem vorgegebenen weiteren Verlauf erzeugt, so dass das Halbleiterschaltelement 50 in den ersten Schaltzustand überführt wird. Zu einem Zeitpunkt T1, beispielsweise 5 µs nach T0, leiten die Feldeffekttransistoren. Der Laststrom I durch das Energienetz 25 steigt linear oder zumindest näherungsweise linear an aufgrund der Induktivität, die im Wesentlichen energienetzbedingte Leitungsinduktivitäten repräsentiert. Zum Zeitpunkt T2, beispielsweise 26 µs nach T1, erreicht der Laststrom I, der in das Energienetz 25 fließt, einen Wert von 250 A. Dieser Wert ist in dem gezeigten Beispiel gleich dem vorgegebenen Schwellenwert der analogen Überwachungsschaltung 30. Zum Zeitpunkt T2 detektiert somit die analoge Überwachungsschaltung 30, dass der Laststrom I den vorgegebenen Schwellenwert überschreitet. Nach einer Reaktionszeit T6 von beispielsweise 8 µs beziehungsweise zum Zeitpunkt T3 beginnt das Abschalten der Feldeffekttransistoren. Die Reaktionszeit T6 umfasst die Antwortzeit der analogen Überwachungsschaltung 30 und eine Signalverzögerungsdauer des ersten Steuersignals vom Ausgang 37 der analogen Überwachungsschaltung 30 bis zu dem Steueranschluss.

Während dieser Reaktionszeit T6 steigt der Laststrom I zumindest näherungsweise linear weiter an. Der Schwellenwert wird vorzugsweise derart vorgegeben, dass trotz des weiteren Stromanstiegs während der Reaktionszeit T6 der Laststrom I unterhalb eines vorgegebenen maximal zulässigen Energiespeicherstroms bleibt. Der vorgegebene maximal zulässigen Energiespeicherstrom beträgt beispielsweise 320 A.

Zum Zeitpunkt T3 beginnt der Gate-Treiber 70 die Feldeffekttransistoren abzuschalten. Zum Zeitpunkt T4, beispielsweise 5 µs nach T3, sind die Feldeffekttransistoren vollständig ausgeschaltet.

Jedoch fließt aufgrund der Induktivität der Laststrom I weiter und die jeweiligen sperrenden Feldeffekttransistoren gehen in einen Avalanche-Betrieb A über. Im Avalanche-Betrieb A wird sehr viel Wärmeenergie in den jeweiligen sperrenden Feldeffekttransistoren erzeugt. Damit steigt die Siliziumtemperatur des jeweiligen sperrenden Feldeffekttransistors rapide an bis zu einer maximalen Temperatur. Anschließend nimmt die Temperatur Temp aufgrund des abfallenden Laststromes I wieder ab. Wenn die Temperatur Temp des Siliziums maximal um 100 K (ΔT = 100 K) ansteigt, erreicht das Silizium bei einer Umgebungstemperatur von 60 °C ein Maximum von 160 °C. Bei einer zulässigen maximalen Betriebstemperatur von 175 °C für die Feldeffekttransistoren ist das Halbleiterschaltelement 50 noch ausreichend zuverlässig betriebsfähig.

### Bezugszeichenliste

- 10: Energiespeichersystem
- 20: Energiespeicher
- 21: erster Pol
- 22: Zweiter Pol
- 25: Energienetz
- 26: erster Anschluss
- 27: zweiter Anschluss
- 30: analoge Überwachungsschaltung
- 32: Messwiderstand
- 34: analoger Komparator
- 35: erster Messanschluss
- 36: zweiter Messanschluss
- 37: Ausgang
- 40: digitale Steuereinrichtung
- 42: Steuerausgang
- 50: Halbleiterschaltelement
- 52: erster Feldeffekttransistor
- 54: zweiter Feldeffekttransistor
- 56: erster Koppelanschluss
- 57: zweiter Koppelanschluss
- 60: Entkopplungsschaltungsmodul
- 62: Leuchtdiode
- 70: Gate-Treiber
- 80: Watchdog-Timer
- A: Avalanche-Betrieb
- I: Laststrom
- T0 ... T5: Zeitpunkte
- T6: Zeitdauer
- Temp: Temperatur des Feldeffekttransistorchips
- UDS: Drain-Source-Spannung des Feldeffekttransistors

## Patentansprüche

1. Schaltungsanordnung zum Betreiben eines Energiespeichers (20) eines Elektro- und/oder Hybridfahrzeugs, wobei die Schaltungsanordnung aufweist,
- eine analoge Überwachungsschaltung (30), die ausgebildet und angeordnet ist, ein Messsignal, das repräsentativ ist für einen Strom, der durch den Energiespeicher (20) fließt, zu erfassen und, abhängig von dem Messsignal, ein vorgegebenes erstes Steuersignal zu erzeugen,
- zumindest ein Halbleiterschaltelement (50), das ausgebildet ist, in einem ersten Schalt zustand den Energiespeicher (20) elektrisch zu koppeln mit einem elektrischen Energienetz (25) des Elektro- und Hybridfahrzeugs und in einem zweiten Schaltzustand den Energiespeicher (20) elektrisch zu entkoppeln von dem elektrischen Energienetz (25), wobei das Halbleiterschaltelement (50) einen Steueranschluss aufweist, der mit einem Ausgang (37) der Überwachungsschaltung (30) signaltechnisch gekoppelt ist, und der Schaltzustand des Halbleiterschaltelements (50) abhängig von dem ersten Steuersignal einstellbar ist, **dadurch gekennzeichnet, dass** die Schaltungsanordnung weiter aufweist:
- eine digitale Steuereinrichtung (40), die ausgebildet ist, abhängig von zumindest einer vorgegebenen energiespeicherbezogenen Betriebsgröße und/oder zumindest einer vorgegebenen fahrzeugbezogenen Umfeldgröße und/oder zumindest einer vorgegebenen fahrzeugbezogenen Betriebsgröße und/oder zumindest einer vorgegebenen energienetzbezogenen Betriebsgröße ein vorgegebenes zweites Steuersignal zu erzeugen und an einer vorgegebenen Schnittstelle auszugeben, die mit dem Steueranschluss des Halbleiterschaltelements (50) signaltechnisch gekoppelt ist, so dass der Schaltzustand des Halbleiterschaltelements (50) abhängig von dem zweiten Steuersignal einstellbar ist, und
- ein Entkopplungsschaltungsmodul (60) mit einem galvanischen Entkopplungselement, einem Ausgang und zumindest einem Eingang, wobei
- - der Ausgang elektrisch gekoppelt ist mit dem Halbleiterschaltelement (50),
- - der Eingang elektrisch gekoppelt ist mit der Überwachungsschaltung (30) und mit der Steuereinrichtung (40) zum Empfang des ersten Steuersignals und des zweiten Steuersignals und
- - das galvanische Entkopplungselement den Ausgang und den zumindest einen Eingang galvanisch entkoppelt und den Ausgang und den zumindest einen Eingang potentialfrei verbindet.

2. Schaltungsanordnung nach Anspruch 1,
bei der
- ein vorgegebener Verlauf des ersten Steuersignals repräsentativ ist für eine Anforderung, dass das Halbleiterschaltelement (50) den zweiten Schaltzustand einnimmt,
- ein vorgegebener Verlauf des zweiten Steuersignal repräsentativ ist für eine Anforderung, dass das Halbleiterschaltelement (50) den zweiten Schaltzustand einnimmt und,
- wenn das erste Steuersignal oder das zweite Steuersignal oder beide Steuersignale den jeweiligen vorgegebenen Verlauf aufweisen, der Steueranschluss des Halbleiterschaltelements (50) derart angesteuert wird, dass das Halbleiterschaltelement (50) den zweiten Schaltzustand einnimmt.

3. Schaltungsanordnung nach Anspruch 2,
bei der
- ein vorgegebener weiterer Verlauf des zweiten Steuersignals repräsentativ ist für eine Anforderung, dass das Halbleiterschaltelement (50) den ersten Schaltzustand einnimmt und,
- wenn das zweite Steuersignal den vorgegebenen weiteren Verlauf aufweist und das erste Steuersignal nicht den vorgegebenen Verlauf aufweist, der Steueranschluss des Halbleiterschaltelements (50) derart angesteuert wird, dass das Halbleiterschaltelement (50) den ersten Schaltzustand einnimmt.

4. Schaltungsanordnung nach einem der vorstehenden Ansprüche,
bei der das Halbleiterschaltelement (50) zumindest einen Feldeffekttransistor umfasst.

5. Schaltungsanordnung nach einem der vorstehenden Ansprüche,
bei der das Halbleiterschaltelement (50) zumindest einen ersten Feldeffekttransistor (52) und zumindest einen zweiten Feldeffekttransistor (54) aufweist, wobei jeweils der zumindest eine zweite Feldeffekttransistor (54) antiseriell in Reihe zu dem zumindest einen ersten Feldeffekttransistor (52) geschaltet ist.

6. Schaltungsanordnung nach einem der vorstehenden Ansprüche,
bei dem das galvanische Entkopplungselement ein optisches Sendeelement und ein optisches Empfangselement aufweist.

7. Schaltungsanordnung nach einem der vorstehenden Ansprüche,
bei dem die analoge Überwachungsschaltung (30) einen Stromsensor und einen analogen Komparator (34) aufweist, wobei der analoge Komparator (34) ausgebildet und angeordnet ist, abhängig von einem Vergleich eines vorgegebenen Schwellenwerts mit einem von dem Stromsensor erfassten Messwert, der repräsentativ ist für einen Strom, der durch den Energiespeicher fließt, das erste Steuersignal zu erzeugen.

8. Energiespeichersystem (10), aufweisend einen Energiespeicher (20) und eine Schaltungsanordnung gemäß einem der Ansprüche 1 bis 7.

## Claims

1. Circuit arrangement for operating an energy store (20) of an electric and/or hybrid vehicle, wherein the circuit arrangement has
- an analogue monitoring circuit (30) that is designed and arranged to record a measured signal that is representative of a current that is flowing through the energy store (20) and to generate a predefined first control signal depending on the measured signal,
- at least one semiconductor switching element (50) that is designed, in a first switching state, to electrically couple the energy store (20) to an electrical energy system (25) of the electric and hybrid vehicle and, in a second switching state, to electrically decouple the energy store (20) from the electrical energy system (25), wherein the semiconductor switching element (50) has a control terminal that is coupled in terms of signalling to an output (37) of the monitoring circuit (30), and the switching state of the semiconductor switching element (50) is able to be set depending on the first control signal, **characterized in that** the circuit arrangement also has:
- a digital controller (40) that is designed to generate a predefined second control signal depending on at least one predefined energy store-related operating variable and/or at least one predefined vehicle-related surroundings variable and/or at least one predefined vehicle-related operating variable and/or at least one predefined energy system-related operating variable and to output said second control signal to a predefined interface that is coupled in terms of signalling to the control terminal of the semiconductor switching element (50), such that the switching state of the semiconductor switching element (50) is able to be set depending on the second control signal, and
- a decoupling circuit module (60) having a galvanic decoupling element, an output and at least one input, wherein
- - the output is electrically coupled to the semiconductor switching element (50),
- - the input is electrically coupled to the monitoring circuit (30) and to the controller (40) in order to receive the first control signal and the second control signal and
- - the galvanic decoupling element galvanically decouples the output and the at least one input and connects the output and the at least one input in a potential-free manner.

2. Circuit arrangement according to Claim 1,
in which
- a predefined profile of the first control signal is representative of a request for the semiconductor switching element (50) to adopt the second switching state,
- a predefined profile of the second control signal is representative of a request for the semiconductor switching element (50) to adopt the second switching state, and
- when the first control signal or the second control signal or both control signals have the respective predefined profile, the control terminal of the semiconductor switching element (50) is driven such that the semiconductor switching element (50) adopts the second switching state.

3. Circuit arrangement according to Claim 2,
in which
- a predefined further profile of the second control signal is representative of a request for the semiconductor switching element (50) to adopt the first switching state, and
- when the second control signal has the predefined further profile and the first control signal does not have the predefined profile, the control terminal of the semiconductor switching element (50) is driven such that the semiconductor switching element (50) adopts the first switching state.

4. Circuit arrangement according to one of the preceding claims,
in which the semiconductor switching element (50) comprises at least one field-effect transistor.

5. Circuit arrangement according to one of the preceding claims,
in which the semiconductor switching element (50) has at least one first field-effect transistor (52) and at least one second field-effect transistor (54), wherein the at least one second field-effect transistor (54) is in each case reverse-connected in series with the at least one first field-effect transistor (52).

6. Circuit arrangement according to one of the preceding claims,
in which the galvanic decoupling element has an optical transmission element and an optical reception element.

7. Circuit arrangement according to one of the preceding claims,
in which the analogue monitoring circuit (30) has a current sensor and an analogue comparator (34), wherein the analogue comparator (34) is designed and arranged to generate the first control signal depending on a comparison between a predefined threshold value and a measured value that is recorded by the current sensor and that is representative of a current that is flowing through the energy store.

8. Energy storage system (10), having an energy store (20) and a circuit arrangement according to one of Claims 1 to 7.

## Revendications

1. Agencement de circuit destiné à faire fonctionner un accumulateur d'énergie (20) d'un véhicule électrique et/ou hybride, l'agencement de circuit comportant
- un circuit de surveillance analogique (30) qui est conçu et disposé pour détecter un signal de mesure représentatif d'un courant circulant dans l'accumulateur d'énergie (20) et pour générer, en fonction du signal de mesure, un premier signal de commande prédéterminé,
- au moins un élément de commutation à semi-conducteur (50) qui est conçu pour coupler électriquement dans un premier état de commutation l'accumulateur d'énergie (20) à un réseau d'énergie électrique (25) du véhicule électrique et hybride et pour découpler électriquement dans un deuxième état de commutation l'accumulateur d'énergie (20) du réseau d'énergie électrique (25), l'élément de commutation à semi-conducteur (50) comportant une borne de commande qui est couplée par une technique de signal à une sortie (37) du circuit de surveillance (30), et l'état de commutation de l'élément de commutation à semi-conducteur (50) pouvant être réglé en fonction du premier signal de commande, **caractérisé en ce que** l'agencement de circuit comporte en outre :
- un dispositif de commande numérique (40) qui est conçu pour générer un deuxième signal de commande prédéterminé en fonction d'au moins une grandeur de fonctionnement prédéterminée liée à l'accumulateur d'énergie et/ou d'au moins une grandeur d'environnement prédéterminée liée au véhicule et/ou d'au moins une grandeur de fonctionnement prédéterminée liée au véhicule et/ou d'au moins une grandeur de fonctionnement prédéterminée liée au réseau d'énergie et pour le délivrer en sortie au niveau d'une interface prédéterminée qui est couplée par une technique de signal à la borne de commande de l'élément de commutation à semi-conducteur (50) de façon à pourvoir régler l'état de commutation de l'élément de commutation à semi-conducteur (50) en fonction du deuxième signal de commande, et
- un module de circuit de découplage (60) pourvu d'un élément de découplage galvanique, d'une sortie et d'au moins une entrée,
- - la sortie étant couplée électriquement à l'élément de commutation à semi-conducteur (50),
- - l'entrée étant couplée électriquement au circuit de surveillance (30) et au dispositif de commande (40) pour recevoir le premier signal de commande et le deuxième signal de commande et
- - l'élément de découplage galvanique découplant galvaniquement la sortie et l'au moins une entrée et reliant la sortie et l'au moins une entrée par contact sec.

2. Agencement de circuit selon la revendication 1, dans lequel
- une variation prédéterminée du premier signal de commande est représentative d'une demande selon laquelle l'élément de commutation à semi-conducteur (50) prend le deuxième état de commutation,
- une variation prédéterminée du deuxième signal de commande est représentative d'une demande selon laquelle l'élément de commutation à semi-conducteur (50) prend le deuxième état de commutation et,
- si le premier signal de commande ou le deuxième signal de commande ou les deux signaux de commande présentent la variation prédéterminée respective, la borne de commande de l'élément de commutation à semi-conducteur (50) est commandée de telle sorte que l'élément de commutation à semi-conducteur (50) prenne le deuxième état de commutation.

3. Agencement de circuit selon la revendication 2, dans lequel
- une autre variation prédéterminée du deuxième signal de commande est représentative d'une demande selon laquelle l'élément de commutation à semi-conducteur (50) prend le premier état de commutation et,
- si le deuxième signal de commande présente l'autre variation prédéterminé et que le premier signal de commande ne présente pas la variation prédéterminée, la borne de commande de l'élément de commutation à semi-conducteur (50) est commandée de telle manière que l'élément de commutation à semi-conducteur (50) prenne le premier état de commutation.

4. Agencement de circuit selon l'une des revendications précédentes, dans lequel l'élément de commutation à semi-conducteur (50) comprend au moins un transistor à effet de champ.

5. Agencement de circuit selon l'une des revendications précédentes, dans lequel l'élément de commutation à semi-conducteur (50) comporte au moins un premier transistor à effet de champ (52) et au moins un deuxième transistor à effet de champ (54), l'au moins un deuxième transistor à effet de champ (54) étant monté tête-bêche en série avec l'au moins un premier transistor à effet de champ (52).

6. Agencement de circuit selon l'une des revendications précédentes, dans lequel l'élément de découplage galvanique comporte un élément de transmission optique et un élément de réception optique.

7. Agencement de circuit selon l'une des revendications précédentes, dans lequel le circuit de surveillance analogique (30) comporte un capteur de courant et un comparateur analogique (34), le comparateur analogique (34) étant conçu et disposé pour générer le premier signal de commande en fonction d'une comparaison d'une valeur seuil prédéterminée avec une valeur de mesure qui est détectée par le capteur de courant et qui est représentative d'un courant circulant à travers l'accumulateur d'énergie.

8. Système à accumulateur d'énergie (10), comprenant un accumulateur d'énergie (20) et un agencement de circuit selon l'une des revendications 1 à 7.
